# EUROPEAN PATENT APPLICATION

(11) **EP 4 017 210 A1**
(43) Date of publication of application: **22.06.2022**
(21) Application number: 20290088.2
(22) Date of filing: 17.12.2020
(51) Int. Cl.: H04W 76/19

(54) **IAB RLF RECOVERY**

(71) Applicant: Thales DIS France SA, 92190 Meudon (FR); Thales, 92400 Courbevoie (FR)
(72) Inventor: Stoecklin, William, 92622 Gennevilliers Cedex (FR); Pauliac, Mireille, 13881 Gémenos Cedex (FR); Jouffrey, Benoit, 13881 Gémenos Cedex (FR)
(74) Representative: Scheer, Luc

(57) **Abstract**

The invention provides a telecommunications system comprising a mobile network (1), a recovery network (4), at least a user equipment (2, 6) and a plurality of gNBs (3) configured to connect the user equipment device (2, 6) to the mobile network. At least one of the user equipment (6) or the gNB (3) is further configured to have IAB functionality in such a way that the user equipment (6) or the gNB (3) has the ability to provide connectivity to the recovery network by means of a wireless communication.

## Description

### TECHNICAL FIELD

This invention belongs to the field of telecommunications, and more particularly, to the system recovery after a disaster.

### STATE OF THE ART

3GPP consortium has defined a service named Isolated E-UTRAN Operation for Public Safety (IOPS) for LTE, in order to maintain a level of communications between public safety users when the backhaul connectivity to the core network may be lost e.g. the backhauling network was damaged. In addition, 3GPP consortium has been extending this recovery mechanism to 5G New Radio in next-to-come 3GPP releases.

In the nominal mode of operation, gNB (next generation NodeB) is connected to a normal core network (Evolved Packet Core or 5G Core) through a backhauling network forming a mobile network.

This backhauling network may rely on multiple transmission solutions like wireline (eg. optical fiber) or wireless (microwave) and a new approach named Integrated Access Backhaul using 5G New Radio (NR).

After losing connectivity to their normal core network, eNB / gNB attempt to switch to IOPS mode of operations. This change of mode operation is completed once they have managed to connect to a local backup core network which can be either collocated or deployed in their vicinity and still accessible through the remaining backhauling network.

In some mission critical scenarios, it may happen that the public safety user is not under coverage of any mobile networks which may be either
- A Public Land Mobile Network (PLMN) or
- A PLMN dedicated to IOPS mode of operations (IOPS PLMN) or
- A Stand-Alone Non-Public Network (SNPN), aka private mobile network.

The main reasons for this coverage reduction are the following ones:
- Some base stations have been destroyed by the disaster;
- Some base stations have stopped their service because they cannot reach any core networks for authorizing users (either normal or local backup core networks).

The present invention provides a way to restore the connection between users and a mobile network in these circumstances.

Throughout the document, the following acronyms will be used:
- PLMN: Public Land Mobile Network
- SNPN: Stand-Alone Non-Public Network
- IOPS: Isolated E-UTRAN Operation for Public Safety
- gNB: Next Generation NodeB
- IAB: Integrated Access Backhaul

### DESCRIPTION OF THE INVENTION

The invention provides a solution for this problem by means of a telecommunications system according to claim 1. Preferred embodiments of the invention are defined in dependent claims.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

In a first inventive aspect, the invention provides a telecommunications system comprising
a mobile network;
a recovery network, wherein the recovery network may be a different entity from the mobile network or may be a different state of the mobile network
at least a user equipment; and
a plurality of gNBs configured to connect the user equipment to the mobile network;
wherein at least one of the user equipment or the gNB is further configured to have integrated access backhaul functionality in such a way that the user equipment or the gNB has the ability to provide connectivity to the recovery network by means of a wireless communication.

In particular embodiments, the mobile network may be either a commercial network or a private network. The recovery network may be a network dedicated to IOPS mode of operation or a modified status of the commercial or private network, which backhaul network has been totally or partially repaired by IAB.

In this telecommunications system, even in the event a first user equipment loses direct contact with the mobile network, due to a disaster or an incident, a different user equipment (if configured with integrated access backhaul node functionality and activated on purpose, for example, by OTA or by the user) or a gNB may act as a IAB node to connect the first user equipment device with the recovery network.

In some particular embodiments, the user equipment or the gNB which is configured to have integrated access backhaul functionality is configured to connect with the recovery network directly.

In this case, the user equipment or the gNB is near enough to the mobile network to enable a connection between the first user equipment and the recovery network.

In some particular embodiments,
the telecommunications system further comprises a plurality of integrated access backhaul nodes configured to provide backhaul connection between any user equipment to the recovery network
the user equipment or the gNB configured to have Integrated Access Backhaul functionality is configured to authenticate with the recovery network via one or more of the integrated access backhaul nodes.

In these cases, the user equipment or the gNB configured to have integrated access backhaul functionality is not able to extend the coverage to the recovery network directly. This situation appears when the user equipment or the gNB configured to have integrated access backhaul functionality is too far from the recovery network, so it is impossible to be under the coverage thereof. In this case, the integrated access backhaul nodes (which were already present in the mobile network to provide backhauling communication) act as a link between the user equipment or the gNB configured to have integrated access backhaul functionality and the recovery network. The recovery network is requested to authenticate the connection made by means of the user equipment or the gNB configured to have integrated access backhaul functionality. Thus, the invention takes advantage of this integrated access backhaul nodes network to connect the user equipment or the gNB configured to have integrated access backhaul functionality to the recovery network in the event this connection cannot be performed by the user equipment or the gNB configured to have integrated access backhaul functionality directly. This is useful when the first user equipment cannot reach any integrated access backhaul network directly, but the user equipment or the gNB configured to have integrated access backhaul functionality is used to connect the first user equipment with the existing integrated access backhaul nodes network, and therefore, to the recovery network.

In some particular embodiments, at least one of the further integrated access backhaul nodes is a user equipment or a gNB configured to have integrated access backhaul functionality.

In this case, if the first user equipment is far enough to connect the recovery network directly, a chain of user equipment or the gNB configured to have integrated access backhaul functionality may be used to reach the recovery network.

In some particular embodiments, the mobile network is a standard public land mobile network and the recovery network is the same mobile network but with a different architecture.

In this case, the mobile network does not have any operational backhauling means, such as a different IOPS network. However, due to the advantageous features of this particular invention, even in the event of a loss of connection between the gNB and the user equipment, different gNBs and/or user equipment may be used as IAB nodes for recovering the connection between the first user equipment and the mobile network (acting as a recovery network), thus becoming fully operative again.

In some particular embodiments, the recovery network is a public land mobile network which is dedicated to IOPS mode of operations.

The IOPS architecture provides IAB nodes for backhauling, and these IAB nodes may be used in the event the gNB may not directly access to the mobile network.

In some particular embodiments, IAB functionality comprises the use of an universal integrated circuit card.

A universal integrated circuit card is a standard way of performing mutual authentication between the IAB functionality and the recovery network in order to allow connection to the recovery network.

However, the invention may also be carried out using an eUICC (embedded UICC), iUICC (integrated UICC), SSP (Smart Secure Platform), iSSP (integrated SSP), eSSP (embedded SSP) or rSSP (removable SSP).

In some particular embodiments, the universal integrated circuit card is configured to use rules to choose a particular backhaul link to establish the connection with the recovery network.

The universal integrated circuit card provides an easy and reliable way of connecting the recovery network.

In some particular embodiments, the rules are stored in the universal integrated circuit card.

This means that there is no need to provide a connection for the universal integrated circuit card to use these rules.

In some particular embodiments, the universal integrated circuit card is configured to receive a specific configuration transmitted over the air from the mobile network or from the recovery network.

Hence, despite needing a connection, more updated configurations may be supplied to the universal integrated circuit card.

In some particular embodiments, the IAB functionality is installed in a gNB.

In some particular embodiments, the gNB is connected to the mobile network or the recovery network by an optic fiber connection.

In some particular embodiments, the IAB functionality is installed in the user equipment.

Since there are many more user equipment than standard IAB nodes, it is useful to use user equipment as IAB nodes to establish a IAB chain until the recovery network connection is achieved. In these cases, the activation of the IAB functionality may require a user action.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows a first example of a telecommunications system according to the invention.
Figure 2 shows a particular scenario of this telecommunications system, where some problems may arise.
Figure 3 shows an alternative scenario of a telecommunications system according to the invention.
Figure 4 shows a different scenario of a telecommunications system according to the invention.
Figure 5 shows an alternative scenario of a telecommunications system according to the invention.
Figures 6 and 7 show different embodiments of a telecommunications system according to the invention where the second user equipment acts as an IAB node in embodiments which are analogue to the ones of Figures 3 and 4.

### DETAILED DESCRIPTION OF THE INVENTION

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

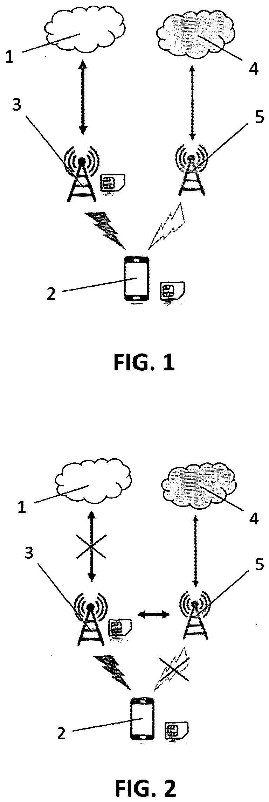

Figure 1 shows a first example of a telecommunications system according to the invention. This system comprises
a public land mobile network 1 comprising an IOPS support network 4
a first user equipment 2
a first gNB 3 configured to connect the first user equipment 2 to the public land mobile network by means of an optic fiber connection; and
a first IAB node 5.

This first IAB node 5 is intended to provide the first user equipment 2 the possibility of connection to the IOPS support network 4 in the event the optic fiber connection with the standard public land mobile network 1 fails.

With this configuration, the standard protocol would indicate that, in the event of a failure of the optic fiber communication between the first gNB 3 and the public land mobile network 1, the first IAB node 5 would provide an alternative connection between the first user equipment 2 and the IOPS support network 4.

In this particular embodiment, the first gNB 3 is further configured to have an additional IAB functionality. This functionality is not required in the standard operation of Figure 1, since, in the event of a connection failure, the first IAB node 5 would provide the alternative connection between the first user equipment device 3 and the IOPS support network 4.

Figure 2 shows a particular scenario of this telecommunications system, where some problems may arise.

Firstly, the optic fiber communication between the first gNB 3 and the public land mobile network 1 is lost due to a natural disaster. In these cases, the first IAB node 5 would be intended to connection to the IOPS support network 4 the first user equipment 2, but in this particular case, the first user equipment 2 cannot reach the first IAB node 5, so there would not be any possibility for the first user equipment 2 to connect the public land mobile network 1 or IOPS support network 4, either directly via the first gNB 3 or subsidiarily via the first IAB node 5.

In this scenario, the IAB functionality of the first gNB 3 enables the first user 2 to achieve this connection. Since the first gNB 3 comprises the IAB functionality, it may serve as the connection between the first user equipment 2 and the first IAB node 5 via gNB 3. This connection was not possible in the systems of the state of the art.

Due to the IAB functionality, the first gNB 3 has the ability to mutually authenticate with the IOPS support network 4 with a wireless communication, in this case via the IAB node 5.

In different embodiments, if no IOPS support network was available, the public land mobile network 1 could act as the recovery network, providing authentication to the IAB node 5 and therefore to the first device 1 (by means of the gNB 3) so that the service is provided despite the natural disaster.

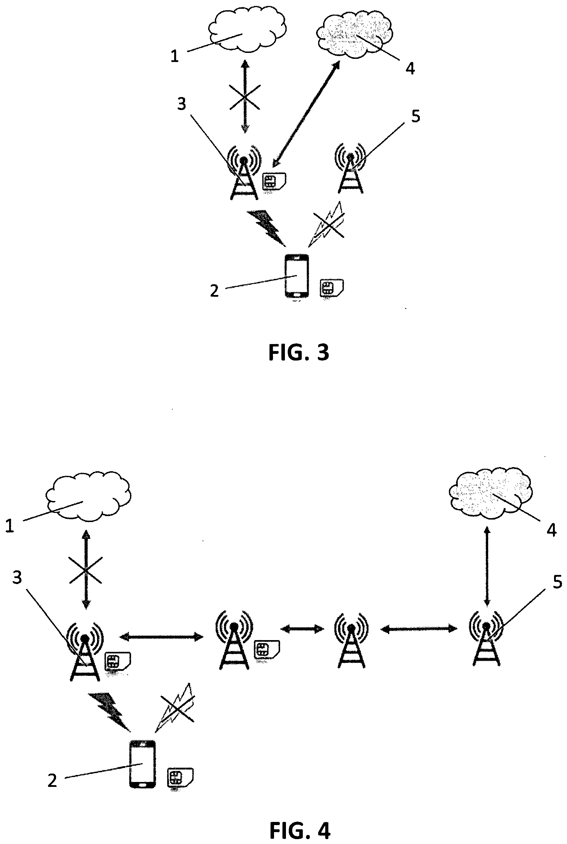

Figure 3 shows an alternative scenario, where IAB functionality provides the first gNB 3 to connect to the IOPS support network 4 when the optic fiber connection fails. This would make the first IAB node 5 unnecessary, since the IAB functionality of the first gNB would make the gNB act as an IAB node itself.

In some particular embodiments, as the one shown in Figure 4, there is a chain of IAB nodes 5 which are used to reach the connection of the IOPS support network. These IAB nodes may be pure IAB nodes or may be gNBs with the IAB functionality. In this way, the network is extended and the connection possibilities are multiplied.

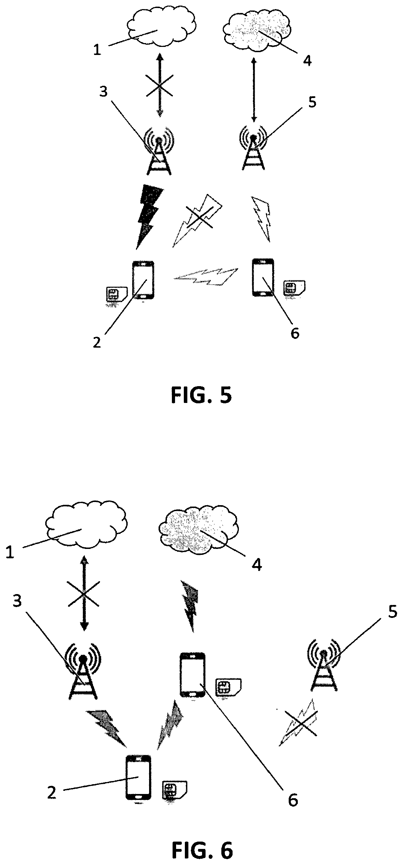

Figure 5 shows an alternative scenario for this telecommunications system.

In this case, the IAB functionality is not provided to a gNB, but to a second user equipment 6.

In standard operation, the first gNB 3 is configured to provide the connection for the first user equipment 2.

In the event of a disaster, the first gNB 3 cannot provide this connection (the same as in Figure 2). Further, since in this case the first gNB 3 does not comprise an IAB functionality, the gNB cannot provide backhaul connection either (as was the case of Figure 2).

In this case, the second user equipment 6 acts in a similar way as the first gNB 3 of Figure 2 did, only in the sense that it provides the connection between the first user equipment 2 and the first IAB node 5.

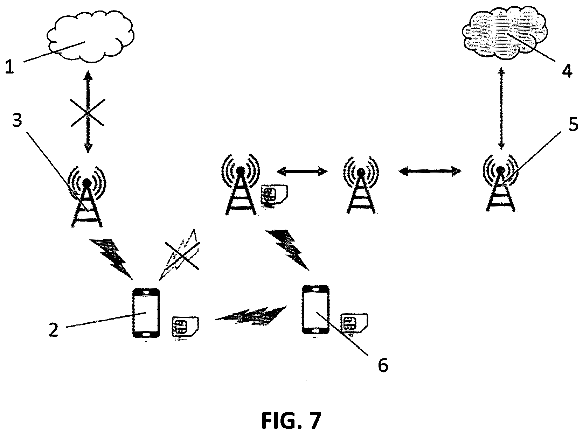

Figures 6 and 7 are scenarios where the second user equipment 6 acts as an IAB node in embodiments which are analogue to the ones of Figures 3 and 4.

In all the scenarios described above, the IAB functionality is enabled by the use of an universal integrated circuit card performing the mutual authentication between the IAB node and core network, and configured to use rules to choose a particular backhaul link to establish the connection with the public land mobile network or the IOPS support network. In some cases, the rules are stored in the universal integrated circuit card; alternatively, the universal integrated circuit card may be configured to receive a specific configuration transmitted over the air from the home public land mobile network.

## Claims

1. Telecommunications system comprising
a mobile network (1);
a recovery network (4), wherein the recovery network (4) may be a different entity from the mobile network or may be a different state of the mobile network;
at least a user equipment (2, 6); and
a plurality of gNBs (3) configured to connect the user equipment device (2, 6) to the mobile network;
wherein at least one of the user equipment (6) or the gNB (3) is further configured to have IAB functionality in such a way that the user equipment (6) or the gNB (3) has the ability to provide connectivity to the recovery network by means of a wireless communication.

2. Telecommunications system according to claim 1, wherein the user equipment (6) or the gNB (3) which is configured to have IAB functionality is configured to connect with the recovery network (4) directly.

3. Telecommunications system according to claim 1, wherein
the telecommunications system further comprises a plurality of IAB nodes (5) configured to provide backhaul connection between any user equipment (2, 6) to the recovery network (4); and
the user equipment (6) or the gNB (3) configured to have IAB functionality is configured to authenticate with the recovery network (4) via one or more of the IAB nodes (5).

4. Telecommunications system according to claim 3, wherein at least one of the further IAB nodes is a user equipment (6) or the gNB (3) configured to have IAB functionality.

5. Telecommunications system according to any of the preceding claims, wherein the public land mobile network (1) is a standard public land mobile network and the recovery network is the same mobile network but with a different architecture.

6. Telecommunications system according to any of claims 1 to 4, wherein the recovery network is a public land mobile network which is dedicated to IOPS mode of operations.

7. Telecommunications system according to any of the preceding claims, wherein IAB functionality comprises the use of a universal integrated circuit card.

8. Telecommunications system according to claim 7, wherein the universal integrated circuit card is configured to use rules to choose a particular backhaul link to establish the connection with the recovery network.

9. Telecommunications system according to claim 8, wherein the rules are stored in the universal integrated circuit card.

10. Telecommunications system according to claim 8, wherein the universal integrated circuit card is configured to receive a specific configuration transmitted over the air from the mobile network or the recovery network.

11. Telecommunications system according to any of the preceding claims, wherein the IAB functionality is installed in a gNB.

12. Telecommunications system according to claim 11, wherein the gNB is connected to the mobile network or to the recovery network by an optic fiber connection.

13. Telecommunications system according to any of claims 1 to 10, wherein the IAB functionality is installed in the user equipment.
